# EUROPEAN PATENT APPLICATION

(11) **EP 4 691 626 A1**
(43) Date of publication of application: **11.02.2026**
(21) Application number: 24780761.3
(22) Date of filing: 29.03.2024
(51) Int. Cl.: B01J 20/22, B01D 53/14, C01B 32/50

(54) **GAS ABSORBENT-SUPPORTING POROUS SUBSTRATE**

(30) Priority: 30.03.2023 JP 2023056530
(71) Applicant: Mitsui Kinzoku Company, Limited, Tokyo (JP)
(72) Inventor: HIGUCHI, Kiyoshi, Ageo-shi, Saitama 362-0021 (JP); KOGAWA, Takahiro, Ageo-shi, Saitama 362-0021 (JP); OSAKO, Takao, Ageo-shi, Saitama 362-0021 (JP)
(74) Representative: Novagraaf Technologies
(86) International application number: PCT/JP2024/012943
(87) International publication number: WO 2024/204666

(57) **Abstract**

A gas absorbent-supporting porous substrate including: a porous substrate including at least macropores; and a gas absorbent supported in at least some pores in the porous substrate. The gas absorbent is a composition containing an amine compound and a polyether. The ratio, Vsa/Vs, of Vsa to Vs is 0.60 or less, where Vs is a pore volume of the mesopores in the porous substrate, and Vsa is a pore volume of the mesopores in the gas absorbent-supporting porous substrate. The ratio, Vma/Vm, of Vma to Vm is 0.50 or greater, where Vm is a pore volume of the macropores in the porous substrate, and Vma is a pore volume of the macropores in the gas absorbent-supporting porous substrate.

## Description

### Technical Field

The present invention relates to a gas absorbent-supporting porous substrate. The present invention also relates to an acid-gas-absorbing material and a carbon-dioxide-absorbing material including the gas absorbent-supporting porous substrate.

### Background Art

With increasing awareness of environmental issues, emissions of carbon dioxide, nitrogen oxides such as NO and NO₂, and sulfur oxides such as SO and SO₂ contained in exhaust gas have come to be recognized as a problem in recent years. For example, technology for separating and recovering carbon dioxide, which is one of the causes of global warming, is attracting attention, and studies are being conducted on a technique for separating and recovering carbon dioxide emitted from thermal power plants and steel plants. One of known techniques for separating and recovering carbon dioxide is a method involving use of a carbon-dioxide-absorbing material composed of a porous material and an amine compound supported thereon.

For example, Patent Literature 1 discloses an amino compound-supporting porous substrate for adsorbing carbon dioxide, the amino compound-supporting porous substrate obtained by exposing a porous substrate including mesopores to an atmosphere containing an amino compound of a gas phase to thereby cause the amino compound to be supported in the mesopores.

### Citation List

### Patent Literature

Patent Literature 1: JP 2015-113337A

### Summary of Invention

However, carbon-dioxide-absorbing materials employing a porous substrate, and particularly, carbon-dioxide-absorbing materials employing a porous substrate including mesopores, unfortunately have a drawback in that the amount of the amine compound that contributes to carbon dioxide absorption capability is small relative to the total amount of the amine compound supported, from the viewpoint of diffusibility and flowability of gas that flows through the porous substrate. Another drawback is that at low temperatures, the desorption rate of the absorbed gas is low, which leads to increased heating costs to achieve efficient desorption.

Accordingly, an objective of the present invention is to provide a gas absorbent-supporting porous substrate capable of overcoming the various drawbacks involved in conventional art described above.

The present invention provides a gas absorbent-supporting porous substrate comprising:
a porous substrate which has pores including at least macropores and mesopores; and
a gas absorbent supported in at least some of the pores in the porous substrate, wherein

the gas absorbent is a composition containing an amine compound and a polyether,
a ratio, Vsa/Vs, of Vsa to Vs is 0.60 or less,
where Vs is a pore volume, per unit volume of the porous substrate, of the mesopores in the porous substrate as determined by mercury porosimetry in a pore size range of greater than 2.0 nm and less than 50 nm, and
Vsa is a pore volume, per unit volume of the gas absorbent-supporting porous substrate, of the mesopores in the gas absorbent-supporting porous substrate as determined by mercury porosimetry in a pore size range of greater than 2.0 nm and less than 50 nm, and
a ratio, Vma/Vm, of Vma to Vm is 0.50 or greater,
where Vm is a pore volume, per unit volume of the porous substrate, of the macropores in the porous substrate as determined by mercury porosimetry in a pore size range of from 50 nm to 10 µm, and
Vma is a pore volume, per unit volume of the gas absorbent-supporting porous substrate, of the macropores in the gas absorbent-supporting porous substrate as determined by mercury porosimetry in a pore size range of from 50 nm to 10 µm.

### Brief Description of Drawings

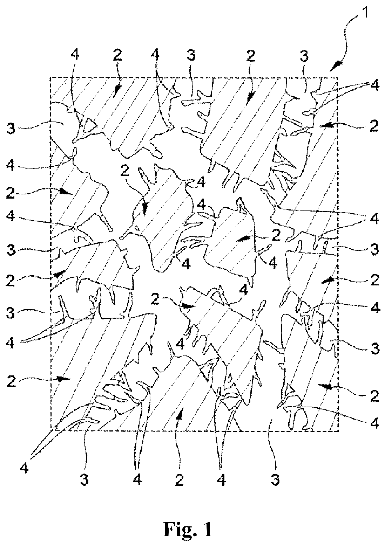

[Fig. 1] Fig. 1 is an enlarged schematic diagram illustrating a relevant portion of a porous substrate used in the present invention.

### Description of Embodiments

The present invention will be described below by way of preferred embodiments thereof with reference to the Drawings. The present invention relates to a porous substrate supporting a gas absorbent. In the present invention, the gas absorbent is supported in at least some of the pores in the porous substrate. Porous substrates supporting amine compounds as gas absorbents have conventionally been known, but one of the features of the gas absorbent-supporting porous substrate of the present invention is the use, as a gas absorbent, of a composition (also referred to hereinafter as "gas-absorbing composition") containing an amine compound and a polyether. By using such a gas absorbent, when a gas has been absorbed by the gas absorbent-supporting porous substrate of the present invention, a compound produced through the reaction of the gas and the amine compound can be dissolved or dispersed in the polyether. This makes it possible to maintain high flowability of the gas absorbent supported on the porous substrate after gas absorption. Thus, the amine compound supported on the porous substrate can efficiently react with the gas, thereby increasing the gas absorption capacity of the gas absorbent-supporting porous substrate. Further, since the gas absorbent supported on the porous substrate maintains high flowability even after gas absorption, the desorption rate of the gas absorbed by the porous substrate can also be enhanced.

As for the amine compound to be included in the gas-absorbing composition, it is possible to use, without particular limitation, any of various compounds including, in the chemical structure thereof, a primary amino group (-NH₂), a secondary amino group (-NHR⁵), a tertiary amino group (-NR⁵R⁶), or a quaternary ammonium group (-N⁺R⁵R⁶R⁷). Here, R⁵, R⁶ and R⁷ each independently represent, for example, a substituted or unsubstituted alkyl group, a substituted or unsubstituted aryl group, etc. Examples of the alkyl group may include alkyl groups having 1 to 10 carbon atoms. The alkyl group may be linear or branched. Examples of the aryl group may include monocyclic, bicyclic or tricyclic aromatic hydrocarbon groups having 6 to 14 carbon atoms. Examples of the aryl group may include a phenyl group, a naphthyl group, etc. Examples of substituents capable of substituting the alkyl group or aryl group may include a hydroxy group, a halogen atom, etc. The halogen atom may be selected from a fluorine atom, a chlorine atom, a bromine atom, and an iodine atom. The amine compound may be, for example, a monoamine-type amine compound including a single amino group in a single amine compound molecule, or a polyamine-type amine compound including two or more amino groups in a single amine compound molecule.

The amine compound may be, for example a low molecular-weight compound or a polymer compound.

For the low molecular-weight compound, for example, an aliphatic amine or an aromatic amine may be used.

For the aliphatic amine, a linear aliphatic amine or a cyclic aliphatic amine may be used, with examples including ethylenediamine, diethylenetriamine, triethylenetetramine, tetraethylenepentamine, pentaethylenehexamine, bis(2-hydroxypropyl)amine, N,N'-bis(2-hydroxyethyl)ethylenediamine, monoethanol amine, diethanol amine, diisopropanol amine, methylamine, dimethylamine, diethylamine, methyldiethanol amine, methylethanol amine, piperidine, piperazine, 2-aminoethylpiperazine, etc.

Examples of the aromatic amine may include 2-picolylamine, aniline, m-xylenediamine, etc.

Examples of the polymer compound may include linear polyethylene imines and branched polyethylene imines. The weight-average molecular weight of the polymer compound is preferably from 300 to 10000, more preferably from 300 to 5000, even more preferably from 300 to 3000, further preferably from 300 to 1000.

One type of the aforementioned amine compound may be used singly, or two or more types may be used in combination.

Of the aforementioned amine compounds, it is preferable to use a polyamine, a primary amine, a secondary amine, a tertiary amine, a quaternary ammonium, an aromatic amine, or a polyimine, from the viewpoint of ease of being supported on the porous substrate and from the viewpoint of high acid-gas absorption capability in cases where the amine compound-supporting porous substrate of the present invention is used as an acid-gas-absorbing material, for example.

In the gas absorbent-supporting porous substrate of the present invention, it is preferable that the ratio of the mass of the amine compound to the mass of the porous substrate is 0.15 or greater. In this way, the gas absorption amount of the gas absorbent-supporting porous substrate can be sufficiently increased. From this viewpoint, it is preferable that the ratio of the mass of the amine compound to the mass of the porous substrate is more preferably 0.20 or greater, even more preferably 0.25 or greater.

The larger the amount of amine compound supported, the more likely the gas absorption amount is to increase, so in this regard, there is no particular limitation regarding the upper limit of the ratio of the mass of the amine compound to the mass of the porous substrate, but from the viewpoint of securing a sufficient amount of polyether to be supported on the porous substrate and also from the viewpoint of sufficiently suppressing leakage of the amine compound from the porous substrate due to an excessive amount of amine compound, it is preferable that the ratio of the mass of the amine compound to the mass of the porous substrate is preferably 10 or less, more preferably 5.0 or less, even more preferably 2.0 or less, further preferably 1.0 or less, further more preferably 0.9 or less, further more preferably 0.8 or less.

Next, the polyether contained in the gas-absorbing composition will be described. As described above, the polyether functions to increase the flowability of the gas absorbent after gas absorption by dissolving or dispersing the compound produced by the reaction between the gas and the amine compound. That is, in the gas absorbent-supporting porous substrate of the present invention, the flowability of the gas absorbent is high even after gas absorption, and thus, unreacted amine compound can easily circulate within the gas absorbent and move to the surface of the gas absorbent. Due to this, the ratio of amino groups that contribute to gas absorption with respect to the amino groups included in the amine compound supported on the porous substrate (also referred to hereinafter as "amine efficiency") becomes high, resulting in a large gas absorption amount. Further, due to the high flowability of the gas absorbent, the reaction product between the absorbed gas and the amine compound can easily circulate within the gas absorbent and move to the surface of the gas absorbent, which increases the desorption rate of the absorbed gas. To further enhance these effects, it is preferable that the polyether and the amine compound are miscible, and more preferably, the polyether and the amine compound are miscible at a temperature at which the gas is absorbed/desorbed by the gas absorbent-supporting porous substrate. The temperature at which the gas is absorbed/desorbed is not particularly limited, and a suitable temperature can be selected as appropriate depending on the type of gas to be absorbed/desorbed, the usage environment, etc.

Herein, the amine efficiency can be calculated by dividing the gas absorption amount of the gas absorbent-supporting porous substrate by a theoretical value of nitrogen atom content per unit mass of the gas absorbent-supporting porous substrate (also referred to hereinafter as "theoretical nitrogen atom content"). A concrete measurement method will be described further below in the Examples.

The polyether is preferably a polyether represented by the following formula (1) or (2):

R¹-(O-A¹)ₙ₁-OR² (1)

R¹O-(A¹-O)ₙ₁-R³-(O-A²)ₙ₂-OR² (2)

In the formulas (1) and (2), A¹ and A² each represent an alkylene group.

R¹ and R² each independently represent a hydrogen atom or an alkyl group.

R³ represents an alkylene group which may optionally be substituted by X.

X represents *-(O-A³)ₙ₃-OR⁴.

A³ represents an alkylene group.

R⁴ represents a hydrogen atom or an alkyl group.

The * represents a bonding site.

Further, n1, n2 and n3 each represent a number of repeating units.

In the formulas (1) and (2), the alkylene groups represented by A¹, A², and A³ may each independently include preferably from 2 to 10 carbon atoms, more preferably from 2 to 8 carbon atoms, even more preferably from 2 to 6 carbon atoms.

Concrete examples of such alkylene groups may include an ethylene group, a propylene group, a butylene group, a pentylene group, a hexylene group, a trimethylene group, a tetramethylene group, etc.

Hereinbelow, except for polyethylene glycol, polyethers wherein A¹ in the formula (1) represents an ethylene group and polyethers wherein A¹, A² and A³ in the formula (2) represent an ethylene group may be referred to as "polyethylene glycol derivatives". Similarly, except for polypropylene glycol, polyethers wherein A¹ in the formula (1) represents a propylene group and polyethers wherein A¹, A² and A³ in the formula (2) represent a propylene group may be referred to as "polypropylene glycol derivatives".

In the formulas (1) and (2), examples of the alkyl groups represented by R¹ and R² may include alkyl groups having from 1 to 6 carbon atoms.

Concrete examples of such alkyl groups may include a methyl group, an ethyl group, a propyl group, a butyl group, a pentyl group, a hexyl group, a 1-methylethyl group, etc.

In the formulas (1) and (2), the alkylene group represented by R³ may include preferably from 2 to 10 carbon atoms, more preferably from 2 to 6 carbon atoms, even more preferably from 2 to 4 carbon atoms.

Concrete examples of such alkylene groups may include the aforementioned concrete examples of the alkylene groups represented by A¹, A² and A³. Among the above, it is preferable that R³ is a trimethylene group.

The alkylene group represented by R³ may optionally be substituted by one or more of X, but does not have to be substituted by X.

In the formulas (1) and (2), the numbers of repeating units represented by n1, n2 and n3 may each independently be preferably from 4 to 30, more preferably from 4 to 20, even more preferably from 4 to 15. When the number of repeating units, n, is 4 or greater, volatilization of the polyether can be suppressed sufficiently. Further, by setting the numbers of repeating units, n1, n2 and n3, to 30 or less, the flowability of the polyether can be improved.

From the same viewpoint, it is preferable that the weight-average molecular weight of the polyether is preferably from 200 to 2000, more preferably from 200 to 1500, even more preferably from 200 to 1000.

The polyether may be, for example, a diol type or a triol type.

Herein, a "diol-type polyether" refers to a polyether having two hydroxy groups. An example of a diol-type polyether may be polyethylene glycol wherein, in the formula (1), A¹ is an ethylene group and R¹ and R² are each a hydrogen atom. Another example may be polypropylene glycol wherein, in the formula (1), A¹ is a propylene group and R¹ and R² are each a hydrogen atom.

Herein, a "triol-type polyether" refers to a polyether having three hydroxy groups. An example of a triol-type polyether may be a polypropylene glycol derivative wherein, in the formula (2), R³ is substituted by a single X, A¹, A² and A³ are each a propylene group, and R¹, R² and R⁴ are each a hydrogen atom.

From the viewpoint of easy availability and compatibility with the amine compound, it is preferable to use polyethylene glycol, polypropylene glycol, or a derivative thereof as the polyether, and more preferably polyethylene glycol or a triol-type polypropylene glycol derivative, and further preferably polyethylene glycol.

The ratio of the mass of the polyether to the mass of the amine compound in the gas-absorbing composition is preferably from 0.05 to 10, more preferably from 0.10 to 5.00, even more preferably from 0.50 to 3.00.

By setting the ratio of the mass of the polyether to the mass of the amine compound to 0.05 or greater, the aforementioned effects of the polyether can be achieved more reliably. Further, by setting the ratio of the mass of the polyether to the mass of the amine compound to 10 or less, a sufficient amount of the amine compound can be supported by the porous substrate, making it possible to increase the gas absorption amount of the gas absorbent-supporting porous substrate of the present invention.

From the same viewpoint, the ratio of the mass of the polyether to the mass of the porous substrate is preferably from 0.05 to 10, more preferably from 0.10 to 5.00, even more preferably from 0.10 to 2.00, further preferably from 0.10 to 1.00, even more preferably from 0.10 to 0.80.

The ratio of the mass of the gas absorbent to the mass of the porous substrate is preferably 0.20 or greater, more preferably 0.25 or greater, even more preferably 0.30 or greater. It is preferable that the ratio of the total mass of the amine compound and the polyether to the mass of the porous substrate is within the aforementioned numerical range.

By setting the ratio of the mass of the gas absorbent to the mass of the porous substrate to 0.20 or greater, the gas absorption amount of the gas absorbent-supporting porous substrate can be sufficiently increased. Further, the larger the amount of gas absorbent supported, the more likely the gas absorption amount is to increase, so in this regard, there is no particular limitation regarding the upper limit of the ratio of the mass of the gas absorbent to the mass of the porous substrate, but by setting the ratio of the mass of the gas absorbent to the mass of the porous substrate to 10 or less, it is possible to sufficiently suppress leakage of the gas absorbent from the porous substrate due to an excessive amount of gas absorbent. Further, since it becomes possible to secure a sufficient number of voids within the porous substrate, the gas desorption rate can be increased. From this viewpoint, the ratio of the mass of the gas absorbent to the mass of the porous substrate is more preferably 5.0 or less, even more preferably 2.0 or less, further preferably 1.8 or less, further more preferably 1.6 or less.

From the viewpoint of securing a sufficient gas absorption amount, it is preferable that the content by percentage of nitrogen atoms ("nitrogen atom percentage") in the gas absorbent-supporting porous substrate is preferably from 2.5 to 30.0 mass%, more preferably from 3.0 to 30.0 mass%, even more preferably from 4.0 to 25.0 mass%, further preferably from 4.5 to 20.0 mass%.

From the same viewpoint, it is preferable that the nitrogen atom content, per unit mass of the gas absorbent-supporting porous substrate, contained in the gas absorbent-supporting porous substrate of the present invention is preferably from 2.1 to 21.4 mmol/g, more preferably from 2.9 to 17.9 mmol/g, even more preferably from 3.2 to 14.3 mmol/g.

The nitrogen atom percentage and the nitrogen atom content of the gas absorbent-supporting porous substrate can be determined, for example, by using an oxygen/nitrogen/hydrogen elemental analyzer ONH836 available from LECO Japan Corporation.

The gas-absorbing composition to be used in the present invention may be used together with an antioxidant from the viewpoint of increasing flowability and enabling the composition to be easily supported in the pores. Examples of the antioxidant may include ascorbic acid, hydroquinone, 3,5-dibutyl-4-hydroxytoluene, butylhydroxyanisole, α-tocopherol, etc. One type of the above additive may be added singly, or two or more types may be added in combination.

Next, the porous substrate to be used in the present invention (i.e., the porous substrate in a state before supporting the gas absorbent) will be described. As for the porous substrate, for example, a porous substrate as disclosed in WO 2022/163834 can be used.

It is advantageous that the porous substrate used in the present invention includes at least macropores and mesopores. In this way, passages for the gas can be secured reliably in the gas absorbent-supporting porous substrate of the present invention, thereby increasing the gas absorption amount and the gas desorption rate.

The term "macropores" in the porous substrate refers to, in general, pores of the porous substrate that have a pore size of 50 nm or greater. In the porous substrate used in the present invention, the pore size distribution of the macropores in the porous substrate is controlled. More specifically, the modal pore size Dm of the macropores in the porous substrate used in the present invention, as determined by mercury porosimetry in a pore size range of from 50 nm to 10 µm, is preferably from 0.05 to 3.0 µm. By setting the modal pore size Dm of the macropores within the aforementioned range, the amine efficiency, the gas absorption amount and the gas desorption rate of the gas absorbent-supporting porous substrate used in the present invention can be further increased. From the viewpoint of making these advantageous effects even more remarkable, the modal pore size Dm of the macropores in the porous substrate used in the present invention is more preferably from 0.07 to 2.0 µm, even more preferably from 0.10 to 1.5 µm, as determined by mercury porosimetry in a pore size range of from 50 nm to 10 µm.

It is preferable that the pore volume of the macropores in the porous substrate to be used in the present invention is controlled. More specifically, in the porous substrate used in the present invention, the pore volume Vm of the macropores in the porous substrate, per unit volume of the porous substrate, is preferably from 0.20 to 0.70 mL/mL, as determined by mercury porosimetry in a pore size range of from 50 nm to 10 µm. By setting the pore volume of the macropores within the aforementioned range, the porous substrate used in the present invention will have a higher compressive strength when made into a molded article. Further, when the gas absorbent is supported on the porous substrate used in the present invention, it becomes possible to increase the amine efficiency, the gas absorption amount, and the gas desorption rate. From the viewpoint of making these advantageous effects even more remarkable, it is preferable that, in the porous substrate used in the present invention, the pore volume Vm of the macropores, per unit volume of the porous substrate, as determined by mercury porosimetry in a pore size range of from 50 nm to 10 µm is more preferably from 0.30 to 0.65 mL/mL, even more preferably from 0.40 to 0.60 mL/mL.

On the other hand, in a state where the porous substrate is supporting the gas absorbent, it is preferable that the pore volume Vma, per unit volume of the gas absorbent-supporting porous substrate, of the macropores in the gas absorbent-supporting porous substrate of the present invention is preferably from 0.10 to 0.70 mL/mL, more preferably from 0.15 to 0.65 mL/mL, even more preferably from 0.20 to 0.60 mL/mL. By setting the pore volume Vma of the macropores in the gas absorbent-supporting porous substrate within the aforementioned range, it becomes possible to further improve both the capability of the gas absorbent-supporting porous substrate to absorb gas and to diffuse the gas being circulated.

In the gas absorbent-supporting porous substrate of the present invention, the ratio, Vma/Vm, of the pore volume Vma, per unit volume of the gas absorbent-supporting porous substrate, of the macropores in the gas absorbent-supporting porous substrate to the pore volume Vm, per unit volume of the porous substrate, of the macropores in the porous substrate is 0.50 or greater. In this way, it becomes possible to achieve both the capability to absorb gas and to diffuse the gas being circulated, and also improve the gas desorption rate. From this viewpoint, Vma/Vm is more preferably 0.60 or greater, even more preferably 0.70 or greater, further preferably 0.75 or greater.

Vma/Vm is ideally 1.00, but may be 0.99 or less, for example.

In addition to the aforementioned macropores, the porous substrate used in the present invention includes mesopores. The term "mesopores" refers to, in general, pores of the porous substrate that have a pore size of greater than 2 nm and less than 50 nm. Since the porous substrate used in the present invention includes both the macropores and the mesopores, advantageous effects can be achieved, such as improvements in the capability of absorbing gas as well as in the efficiency of supporting the gas absorbent. From the viewpoint of making these advantageous effects even more remarkable, it is preferable that, in the porous substrate used in the present invention, the modal pore size Ds of the mesopores as determined by mercury porosimetry in a pore size range of greater than 2.0 nm and less than 50 nm, is greater than 2.0 nm and less than 50.0 nm, more preferably from 7.0 to 40.0 nm, even more preferably from 10.0 to 35.0 nm, further preferably from 12.0 to 35.0 nm.

It is preferable that the pore volume of the mesopores in the porous substrate used in the present invention is controlled. More specifically, in the porous substrate used in the present invention, the pore volume Vs of the mesopores, per unit volume of the porous substrate, is preferably from 0.05 to 0.50 mL/mL, as determined by mercury porosimetry in a pore size range of greater than 2.0 nm and less than 50 nm. When the pore volume of the mesopores is within the aforementioned range, the porous substrate used in the present invention will have a high compressive strength when made into a molded article. Further, when the gas absorbent is supported on the porous substrate used in the present invention, the gas absorbent-supporting porous substrate will have high amine efficiency, gas absorption amount and gas desorption rate. From the viewpoint of making these advantageous effects even more remarkable, it is preferable that, in the porous substrate used in the present invention, the pore volume Vs of the mesopores, as determined by mercury porosimetry in a pore size range of greater than 2.0 nm and less than 50 nm, is more preferably from 0.10 to 0.40 mL/mL, even more preferably from 0.10 to 0.35 mL/mL, further preferably from 0.10 to 0.20 mL/mL.

On the other hand, in a state where the porous substrate is supporting the gas absorbent, it is preferable that the pore volume Vsa, per unit volume of the gas absorbent-supporting porous substrate, of the mesopores in the gas absorbent-supporting porous substrate of the present invention, as determined by mercury porosimetry in a pore size range of greater than 2.0 nm and less than 50 nm, is preferably from 0.01 to 0.30 mL/mL, more preferably from 0.01 to 0.25 mL/mL, even more preferably from 0.01 to 0.20 mL/mL, further preferably from 0.01 to 0.15 mL/mL. When the pore volume Vsa of the mesopores in the gas absorbent-supporting porous substrate is within the aforementioned range, the gas absorbent-supporting porous substrate can be provided with both the capability to absorb gas and to diffuse the gas being circulated.

In the gas absorbent-supporting porous substrate of the present invention, the ratio, Vsa/Vs, of the pore volume Vsa, per unit volume of the gas absorbent-supporting porous substrate, of the mesopores in the gas absorbent-supporting porous substrate to the pore volume Vs, per unit volume of the porous substrate, of the mesopores in the porous substrate is 0.60 or less. In this way, the gas absorption amount of the gas absorbent-supporting porous substrate can be sufficiently increased. From this viewpoint, Vsa/Vs is more preferably 0.50 or less, even more preferably 0.45 or less, further preferably 0.20 or less. There is no particular limitation to the lower limit value of Vsa/Vs, but from the viewpoint of achieving both the capability to absorb gas and to diffuse the gas being circulated, Vsa/Vs may be 0.02 or greater, or 0.03 or greater, or 0.04 or greater, or 0.05 or greater.

Vma/Vm and Vsa/Vs can be calculated by measuring the pore volume of the macropores and the pore volume of the mesopores in both the gas absorbent-supporting porous substrate and the porous substrate with no gas absorbent supported thereon. The gas absorbent supported on the porous substrate can be removed, without deforming the skeletal structure of the porous substrate, by, for example, calcining the same at a temperature of 600°C or lower in atmospheric air. Therefore, it is preferable to measure the pore volume of the porous substrate with no gas absorbent supported thereon, after calcining the gas absorbent-supporting porous substrate at a temperature of 600°C or lower in atmospheric air.

The aforementioned pore volume, per unit volume, of the porous substrate and the gas absorbent-supporting porous substrate can be calculated by using bulk density and the pore volume per unit mass as determined according to an ordinary method. The bulk density can be measured, for example, by mercury porosimetry.

In the porous substrate used in the present invention, the total pore volume Vt per unit volume of the porous substrate as determined by mercury porosimetry is preferably from 0.55 to 0.95 mL/mL. When the substrate has such a pore volume, the porous substrate used in the present invention will have a high compressive strength when made into a molded article. Further, when the gas absorbent is supported on the porous substrate used in the present invention, it becomes possible to increase the amine efficiency, the gas absorption amount, and the gas desorption rate. From the viewpoint of making these advantageous effects even more remarkable, it is preferable that, in the porous substrate used in the present invention, the total pore volume Vt per unit volume of the porous substrate as determined by mercury porosimetry is more preferably from 0.55 to 0.90 mL/mL, even more preferably from 0.60 to 0.85 mL/mL, further preferably from 0.60 to 0.80 mL/mL.

On the other hand, as regards the total pore volume of the gas absorbent-supporting porous substrate of the present invention in a state where the porous substrate is supporting the gas absorbent, it is preferable that total pore volume Va per unit volume of the gas absorbent-supporting porous substrate as determined by mercury porosimetry is preferably from 0.05 to 0.80 mL/mL, although this depends on the type and the amount of the gas absorbent being supported. When the gas absorbent-supporting porous substrate has such a pore volume, it becomes possible to achieve both the capability to absorb gas and to diffuse the gas being circulated. From the viewpoint of making these advantageous effects even more remarkable, it is preferable that, in the gas absorbent-supporting porous substrate used in the present invention, the total pore volume Va per unit volume of the gas absorbent-supporting porous substrate as determined by mercury porosimetry is more preferably from 0.10 to 0.75 mL/mL, even more preferably from 0.20 to 0.75 mL/mL.

In cases where the porous substrate used in the present invention includes macropores and mesopores, the ratio, Dm/Ds, of the modal pore size Dm of the macropores to the modal pore size Ds of the mesopores is preferably from 1 to 1500, because an advantageous effect of improving gas absorption capability can be achieved. Further, by including both the macropores and mesopores, the gas absorbent which cannot be supported in the mesopores and leaks out therefrom can be supported by the macropores serving as a reservoir, thus achieving the advantageous effect of suppressing leakage of the gas absorbent from the porous substrate. From the viewpoint of making these advantageous effects even more remarkable, the ratio Dm/Ds is more preferably from 2 to 1000, even more preferably from 3 to 500, further preferably from 5 to 200.

In cases where the porous substrate used in the present invention includes macropores and mesopores, the porous substrate 1, as illustrated in Fig. 1, preferably has a co-continuous structure constituted by: a skeleton 3 in which mesopores 4 are formed; and macropores 2. In the porous substrate 1 illustrated in Fig. 1, the skeleton 3 and the macropores 2 each have a continuous three-dimensional mesh structure and are also intertwined with each other, thereby forming the co-continuous structure constituted by the skeleton 3 and the macropores 2. The fact that the porous substrate 1 has this co-continuous structure constituted by the skeleton 3 and the macropores 2 can be confirmed by observing a surface or a cross section of the porous substrate 1 using a scanning electron microscope (hereinafter also referred to as "SEM").

The skeleton 3 illustrated in Fig. 1 is a portion constituted by the material forming the porous substrate 1. The material forming the porous substrate 1 may be, for example, an oxide ceramic containing a metalloid element or a metal element.

An example of the metalloid element may be silicon. An example of an oxide ceramic containing silicon may be silica (SiO₂).

Examples of the metal element may include aluminum, tin, and zinc, as well as transition metal elements such as cerium, titanium, zirconium, vanadium, chromium, iron, cobalt, nickel, palladium, platinum, copper, silver, and gold. Out of these, it is preferable to use aluminum, tin, cerium, titanium, or zirconium, from the viewpoint of ease in production of the porous substrate 1. Examples of oxide ceramics containing aluminum, tin, cerium, titanium, or zirconium may include alumina (Al₂O₃), tin oxide (SnO₂), ceria (CeO₂), titania (TiO₂), zirconia (ZrO₂), etc.

In cases where the oxide ceramic contains silicon, aluminum, tin, zinc, or a transition metal element, the oxide ceramic may further contain, in addition to silicon, aluminum, tin, zinc, or the transition metal element, an element selected from alkali metal elements such as lithium and sodium, alkaline-earth metal elements such as magnesium and calcium, and rare earth elements such as lanthanum, scandium, yttrium, and gadolinium.

There is no particular limitation to the shape of the porous substrate used in the present invention. The porous substrate may have, for example, a spherical shape, a polyhedral shape, a columnar shape, a flat shape, or any combination thereof. In cases where the gas absorbent-supporting porous substrate according to the present invention is used, for example, as a gas-absorbing material, which will be described later, it is preferable that the porous substrate is a molded article from the viewpoint of reducing pressure loss. In cases where the porous substrate is a molded article, appropriate gaps are formed between pieces of the porous substrate, thereby enabling efficient gas absorption without causing an excessive pressure loss. There is no particular limitation to the shape of the molded article. The molded article may have, for example, a columnar shape, which will be described later, a spherical shape, a polyhedral shape, a flat shape, or any combination thereof.

In cases where the porous substrate is a columnar molded article, the porous substrate may be, for example, a columnar body with a convex-curved lateral face, such as a circular cylinder or an elliptic cylinder. Alternatively, the porous substrate may be a polygonal prism such as a quadrangular prism, a hexagonal prism, or an octagonal prism, or in other words, a columnar body having a plurality of planes as lateral faces. In cases where the porous substrate is a columnar body, the columnar body may include a missing portion. For example, the cross section of the columnar body may be a circular shape, an elliptic shape, or a polygonal shape, with a portion thereof missing.

Geometrically, the term "columnar body" usually refers to a columnar body whose end faces are planar at the upper and lower ends in the height direction of the columnar body. However, in the present invention, the end faces do not necessarily need to be planar in a strict sense, and may have a curved portion (a convex curve portion and/or a concave curve portion) as long as the whole can be regarded as a columnar body.

In cases where the porous substrate is a columnar molded article, the average diameter of the columnar molded article, or in other words, the average diameter of a cross section of the columnar body when the columnar body is cut in a direction perpendicular to the height direction of the columnar body is preferably 1.5 mm or greater, more preferably 2.5 mm or greater, even more preferably 3.0 mm or greater, yet even more preferably 3.5 mm or greater, and yet even more preferably 4.0 mm or greater. On the other hand, the upper limit value of the average diameter of the columnar body is preferably 20 mm or less, more preferably 14 mm or less, even more preferably 12 mm or less, further preferably 10 mm or less, and yet even more preferably 8.0 mm or less. When the average diameter of the columnar body is set within the above-described range, the columnar body has improved durability and can also support a larger amount of the gas absorbent. Note that, when the columnar body is cut in a direction perpendicular to the height direction of the columnar body, the cross section of the columnar body may not be circular, and in such a case, the term "average diameter" as used above means a circle equivalent diameter in the area of the cross section.

The porous substrate used in the present invention can be produced, for example, according to the method disclosed in WO 2022/163834.

There is no particular limitation to the method for allowing the porous substrate used in the present invention to support the gas absorbent. For example, the gas absorbent is mixed with a solvent miscible therewith to prepare a solution, and the solution is mixed with the porous substrate to cause the solution to permeate into the pores of the porous substrate. Next, the solvent of the solution including the porous substrate is removed by evaporation under a reduced pressure, and the resulting porous substrate is heat dried to cause the gas absorbent to remain in the pores of the porous substrate.

Another non-chemical bond modification method may be as follows. The gas absorbent and the porous substrate are placed in an autoclave such that they are spaced apart from each other. Then, the autoclave is evacuated to fill the autoclave with a vapor of the gas absorbent to thereby introduce the gas absorbent into the pores of the porous substrate.

The gas absorbent-supporting porous substrate of the present invention can be used to absorb various types of gases by employing the properties of the amine compound supported on the gas absorbent-supporting porous substrate. Particularly, an absorbing material including the gas absorbent-supporting porous substrate according to the present invention can suitably be used as an acid-gas-absorbing material for absorbing, for example, carbon dioxide, nitrogen oxides, sulfur oxides, etc., by employing chemisorption attributable to amino groups.

Notably, the gas absorbent-supporting porous substrate of the present invention is advantageous in terms of high amine efficiency and gas absorption amount due to the inclusion of a polyether in the gas absorbent. Accordingly, using the gas absorbent-supporting porous substrate allows for a wide range of gases and pressure conditions to be selected for treatment.

Particularly, in cases where the gas absorbent-supporting porous substrate according to the present invention is a molded article, there are advantages in that the pressure loss when a gas is circulated can be greatly suppressed due to the synergistic effect of the shape of the porous substrate and the macropores in the porous substrate, and it is therefore possible to treat a large amount of gas that contains a target gas to be absorbed at a low concentration. For example, in cases where air is used as the gas to be treated, it is possible to treat a large amount of carbon dioxide contained in the air at a high speed. This is extremely advantageous from the viewpoint of preventing global warming by removing carbon dioxide from the air and also complying with emission control regulations by removing carbon dioxide from the gas emitted from plants.

The acid gas absorbed by the gas absorbent-supporting porous substrate according to the present invention, such as carbon dioxide, nitrogen oxides and sulfur oxides, can be desorbed by heating the gas absorbent-supporting porous substrate. As described above, the gas absorbent-supporting porous substrate of the present invention is advantageous in having a high gas desorption rate since the flowability of the gas absorbent is high even after gas absorption, and can thereby be promptly reused as a gas-absorbing material. Particularly, in the gas absorbent-supporting porous substrate of the present invention, since the flowability of the gas absorbent is high even without being heated to high temperatures, the desorption of gas proceeds promptly even when the gas absorbent-supporting porous substrate is heated at a relatively low temperature. As a result, it becomes possible to reduce heating costs at the time of gas desorption and also suppress degradation of the material forming the gas absorbent-supporting porous substrate due to exposure to intense heat.

For example, the desorbed carbon dioxide can be used as a starting material for synthesizing various types of organic compounds, specifically, for example, as a starting material for synthesizing methane, propylene, gasoline, or the like. The gas absorbent-supporting porous substrate that has absorbed carbon dioxide may also be stored for a long period of time in a storage facility. Also, the desorbed nitrogen oxide can be used as, for example, a starting material for synthesizing nitric acid. The desorbed sulfur oxide can be used as, for example, a starting material for synthesizing hydrogen sulfide or sulfuric acid.

The foregoing embodiments of the present invention encompass the following technical concepts.
{1} A gas absorbent-supporting porous substrate comprising:
   a porous substrate which has pores including at least macropores and mesopores; and
   a gas absorbent supported in at least some of the pores in the porous substrate, wherein

   the gas absorbent is a composition containing an amine compound and a polyether,
   a ratio, Vsa/Vs, of Vsa to Vs is 0.60 or less,
   where Vs is a pore volume, per unit volume of the porous substrate, of the mesopores in the porous substrate as determined by mercury porosimetry in a pore size range of greater than 2.0 nm and less than 50 nm, and
   Vsa is a pore volume, per unit volume of the gas absorbent-supporting porous substrate, of the mesopores in the gas absorbent-supporting porous substrate as determined by mercury porosimetry in a pore size range of greater than 2.0 nm and less than 50 nm, and
   a ratio, Vma/Vm, of Vma to Vm is 0.50 or greater,
   where Vm is a pore volume, per unit volume of the porous substrate, of the macropores in the porous substrate as determined by mercury porosimetry in a pore size range of from 50 nm to 10 µm, and
   Vma is a pore volume, per unit volume of the gas absorbent-supporting porous substrate, of the macropores in the gas absorbent-supporting porous substrate as determined by mercury porosimetry in a pore size range of from 50 nm to 10 µm.
{2} The gas absorbent-supporting porous substrate as set forth in clause {1}, wherein a nitrogen atom percentage is from 2.5 to 30 mass%.
{3} The gas absorbent-supporting porous substrate as set forth in clause {1} or {2}, wherein a ratio of a mass of the polyether to a mass of the amine compound is from 0.05 to 10.
{4} The gas absorbent-supporting porous substrate as set forth in any one of clauses {1} to {3}, wherein a ratio of a mass of the gas absorbent to a mass of the porous substrate is 0.20 or greater.
{5} The gas absorbent-supporting porous substrate as set forth in any one of clauses {1} to {4}, wherein the amine compound and the polyether are miscible.
{6} The gas absorbent-supporting porous substrate as set forth in any one of clauses {1} to {5}, wherein the polyether is a polyether represented by formula (1) or (2) below:

   R¹-(O-A¹)ₙ-OR² (1)

   ; or

   R¹O-(A¹-O)ₙ₁-R³-(O-A²)ₙ₂-OR² (2),

   wherein, A¹ and A² each represent an alkylene group,
   R¹ and R² each independently represent a hydrogen atom or an alkyl group,
   R³ represents an alkylene group which may optionally be substituted by X, X represents *-(O-A³)ₙ₃-OR⁴,
   A³ represents an alkylene group,
   R⁴ represents a hydrogen atom or an alkyl group,
   * represents a bonding site, and
   n1, n2 and n3 each represent a number of repeating units.
{7} The gas absorbent-supporting porous substrate as set forth in any one of clauses {1} to {6}, wherein the polyether is a polyether having a weight-average molecular weight of from 200 to 2000.
{8} The gas absorbent-supporting porous substrate as set forth in any one of clauses {1} to {7}, wherein the porous substrate has a total pore volume of from 0.55 to 0.95 mL/mL as determined by mercury porosimetry.
{9} The gas absorbent-supporting porous substrate as set forth in any one of clauses {1} to {8}, wherein the porous substrate has a co-continuous structure comprising:
   a skeleton having the mesopores; and
   the macropores.
{10} The gas absorbent-supporting porous substrate as set forth in any one of clauses {1} to {9}, wherein the skeleton of the porous substrate contains an element selected from silicon, aluminum, tin, cerium, titanium, and zirconium.
{11} The gas absorbent-supporting porous substrate as set forth in any one of clauses {1} to {10}, wherein the porous substrate is a molded article.
{12} An acid-gas-absorbing material including the gas absorbent-supporting porous substrate as set forth in any one of clauses {1} to {11}.
{13} A carbon-dioxide-absorbing material including the gas absorbent-supporting porous substrate as set forth in any one of clauses {1} to {11}.

### Examples

Hereinafter, the present invention will be described in further detail by way of Examples. However, the scope of the present invention is not limited to the Examples given below. Unless otherwise stated, the percent sign "%" used herein means "mass%".

### {Example 1}

### (1) Production of Porous Substrate

A porous substrate for this Example was prepared by the production method disclosed in Japanese Patent No. 6924338. In a 100 L vessel were placed 2052 g of polyethylene glycol 10000, 2160 g of urea, 14.5 g of acetic acid, and 24 kg of water, and these were stirred at room temperature for 30 minutes, to prepare an aqueous solution of polyethylene glycol. To a sol solution preparation system including two feed pumps, a static mixer, and a cooling pipe (2°C), the aqueous polyethylene glycol solution was fed at a feed rate of 90 mL per minute and tetramethoxysilane was fed at a feed rate of 45 mL per minute, and these were mixed and cooled in the system, to obtain a mixed solution. The mixed solution was collected in a stirring tank cooled at 15°C, and stirred for 30 minutes. After stirring, the sol solution was fed to a 600 mL vessel, and a mold for shaping circular-cylindrical pellets with a diameter of 4.6 mm was placed therein. The resultant was warmed in a bath at 30°C, to thereby produce a polysiloxane gel.

Next, the obtained polysiloxane gel was placed in a reaction vessel containing 100 mL of 3 mol/L urea water, and the resultant was heated under reflux for 12 hours. After completion of the reaction, the obtained polysiloxane gel was washed with water, and dried in a drying machine at 60°C for 12 hours. After drying, the dried polysiloxane gel was calcined in an air atmosphere at 600°C for 5 hours, to obtain a circular-cylindrical porous substrate with a diameter of 4.6 mm. The length of the obtained porous substrate was adjusted by cutting the porous substrate so as to have an aspect ratio of 1.5.

The structure of the obtained porous substrate was observed using a SEM (JSM-7900F available from JEOL Ltd.), and it was confirmed that the porous substrate had a co-continuous structure constituted by: a silica skeleton including mesopores formed therein; and macropores.

### (2) Support of Gas Absorbent

Polyethylene imine 600 (weight-average molecular weight: 600) was used as the amine compound. Polyethylene glycol 200 (weight-average molecular weight: 200) was used as the polyether. Hereinbelow, polyethylene imine may be referred to as "PEI", and polyethylene glycol may be referred to as "PEG". Note that PEI600 and PEG200 were miscible.

In 10.5 mL of water were dissolved 3.5 g of PEI600 and 3.5 g of PEG200, to prepare an aqueous solution of gas absorbent. Then, 2.5 g of the porous substrate produced as above was added to the aqueous solution. This was left to stand overnight, and thereafter, water was removed at 100°C under reduced pressure, to obtain a gas absorbent-supporting porous substrate in which a gas absorbent containing PEI600 and PEG200 was supported in the pores of the porous substrate.

### {Examples 2 to 9}

Gas absorbent-supporting porous substrates were obtained in the same manner as in Example 1, except that the types and amounts of amine compounds supported and the types and amounts of polyethers supported were as shown in Table 1. The polyethers used in Examples 7, 8, and 9 were as follows.
- Example 7: A polyether (also referred to hereinafter as "Me2(PEG200)") having a weight-average molecular weight of 200, wherein, in the above formula (1), A¹ represents an ethylene group, and R¹ and R² represent a methyl group.
- Example 8: Polypropylene glycol 400 (weight-average molecular weight: 400; also referred to hereinafter as "diol-type PPG400").
- Example 9: A triol-type polypropylene glycol derivative (also referred to hereinafter as "triol-type PPG300") having a weight-average molecular weight of 300, wherein, in the above formula (2), R³ represents a trimethylene group substituted at the 2-position by X, A¹, A² and A³ represent a propylene group, and R¹, R² and R⁴ represent a hydrogen atom.

In Example 5, polyethylene imine 300 (weight-average molecular weight: 300; also referred to hereinafter as "PEI300") was used as the amine compound.

It should be noted that, in each of the Examples, the amine compound and the polyether that were used had compatibility.

### {Comparative Example 1}

A gas absorbent-supporting porous substrate was obtained in the same manner as in Example 1, except that a gas absorbent composed only of the amine compound, without using the polyether, was supported on the porous substrate at a mass ratio of 1:1.

### {Comparative Examples 2 and 3}

Gas absorbent-supporting porous substrates were obtained in the same manner as in Example 1, except that Mesoporous Silica CARiACT Q-10 (from Fuji Silysia Chemical Ltd.) was used as the porous substrate, and the amine compound and the polyether were supported in amounts shown in Table 1.

### {Comparative Examples 4 and 5}

Gas absorbent-supporting porous substrates were obtained in the same manner as in Example 1, except that the amine compound and the polyether were supported in amounts shown in Table 1.

**{Evaluation}** For each of the porous substrates used in the Examples and Comparative Examples, the pore volume Vm of macropores, the pore volume Vs of mesopores, the total pore volume Vt, the modal pore size Dm of macropores, and the modal pore size Ds of mesopores were determined by the following methods. In Comparative Examples 2 and 3, the porous substrate used was mesoporous silica, and the modal pore size of macropores was not measured, so this is indicated as "-" in Table 1.

Also, for each of the gas absorbent-supporting porous substrates obtained in the Examples and Comparative Examples, the pore volume Vma of macropores, the pore volume Vsa of mesopores, and the total pore volume Va were determined by the same methods as for the porous substrates.

Also, for each of the gas absorbent-supporting porous substrates obtained in the Examples and Comparative Examples, the nitrogen atom percentage, the nitrogen atom content, the carbon dioxide absorption amount, the amine efficiency, and the carbon dioxide desorption rate were determined by the following methods.

The results are shown in Tables 1 and 2 below.

It should be noted that, in Comparative Example 2, the amount of the gas absorbent used relative to the pore volume of the porous substrate was too large, and the gas absorbent overflowed, resulting in items that could not be evaluated. The measurement results regarding items that could not be evaluated are indicated as "Unmeasurable" in Tables 1 and 2.

### {Pore Volumes Vt, Vm, Vs, Va, Vma, Vsa, and Va}

The respective pore volumes were determined by mercury porosimetry using a mercury porosimeter (Auto Pore IV 9520 available from Micromeritics Instrument Corporation). In the mercury porosimetry, mercury was forced into the pores of the porous substrate and the gas absorbent-supporting porous substrate by applying pressure, and the pore volume per unit mass was determined on the basis of the pressure and the mercury intrusion amount. The pore volume per unit mass was multiplied by the bulk density determined as described below, to thereby calculate the pore volume per unit volume.

In the Examples and Comparative Examples, the pore volumes of macropores, Vm and Vma, were each determined by measuring, by mercury porosimetry, pores in a diameter range from 50 nm to 10 µm. The pore volumes of mesopores, Vs and Vsa, were each determined by measuring, by mercury porosimetry, pores in a diameter range of greater than 2 nm and less than 50 nm. The total pore volumes, Vt and Va, were each obtained by summing the pore volume of macropores and the pore volume of mesopores.

### {Bulk Density}

The bulk density of each of the porous substrates and the gas absorbent-supporting porous substrates was determined by mercury porosimetry using a mercury porosimeter (Auto Pore IV 9520 available from Micromeritics Instrument Corporation) by the following measurement procedure under the following measurement conditions.

### Measurement Conditions:

Mercury Parameters:
   Advancing contact angle: 130.0 degrees,
   Receding contact angle: 130.0 degrees,
   Surface tension: 485.0 mN/m (485.0 dynes/cm),
   Mercury density: 13.5335 g/mL.
Low-Pressure Parameters:
   Evacuation pressure: 50 µmHg,
   Evacuation time: 5.0 min,
   Mercury injection pressure: 0.0035 MPa,
   Equilibrium time: 10 secs.
High-Pressure Parameters:
   Equilibrium time: 10 secs,
   Intrusion volume: adjusted to be from 25% to 90%,
   Measurement environment: 20°C.
Measurement Method:
   (1) About 0.5 g of a sample was weighed and placed in a sample cell, and the weighed value was input.
   (2) In the low-pressure region, measurement was performed in a range from 0.0048 to 0.2068 MPa.
   (3) In the high-pressure region, measurement was performed in a range from 0.2068 to 255.1060 MPa.
   (4) The pore size distribution was calculated on the basis of the mercury injection pressure and the amount of mercury injected.

The steps (2), (3), and (4) were automatically performed using software accompanying the system. On the basis of the pore size distribution obtained through calculation described above, the bulk density was calculated using the accompanying software. The bulk density was referenced from the "Bulk Density at 0.0035 MPa" item displayed in the software.

### {Modal Pore Size Dm of Macropores}

The modal pore size Dm of the macropores was determined by mercury porosimetry using a mercury porosimeter (Auto Pore IV 9520 available from Micromeritics Instrument Corporation). In the mercury porosimetry, mercury was forced into the pores of the porous substrate by applying pressure, and the pore volume and the specific surface area were determined on the basis of the pressure and the mercury intrusion amount. The pore size was calculated on the basis of the relationship between the pore volume and the specific surface area obtained assuming that the pores were in the shape of a circular cylinder. Here, analysis was performed by mercury porosimetry for pores in a diameter range from 50 nm to 10 µm.

### {Modal Pore Size Ds of Mesopores}

The modal pore size Ds of the mesopores was determined by mercury porosimetry using a mercury porosimeter (Auto Pore IV 9520 available from Micromeritics Instrument Corporation) in the same manner as for the modal pore size of the macropores. Here, analysis was performed by mercury porosimetry for pores in a diameter range of greater than 2 nm and less than 50 nm.

### {Nitrogen Atom Percentage and Nitrogen Atom Content}

The nitrogen atom percentage and the nitrogen atom content of the gas absorbent-supporting porous substrate were quantified using an oxygen/nitrogen/hydrogen elemental analyzer ONH836 available from LECO Japan Corporation. Measurement was not performed in Examples 7 to 9, so the measurement results are indicated as "-" in the Table.

It should be noted that, due to the influence of an imbalance in the distribution of the supported gas absorbent, there are cases where the nitrogen atom content may exceed the value of the theoretical nitrogen atom content described below.

### {Carbon Dioxide Absorption Amount}

The amount of carbon dioxide absorbed was measured using an adsorption amount/adsorption rate measurement device BELCAT II available from MicrotracBEL. 0.1 g of the gas absorbent-supporting porous substrate was placed in a sample cell and pretreated under a helium flow (50 sccm) at 120°C for 30 minutes. After the pretreatment, the temperature of the sample chamber was set to 25°C, and 4 vol% carbon dioxide gas was allowed to flow at 50 sccm for 25 minutes. After that, the flow of carbon dioxide was stopped, and helium was allowed to flow at 50 sccm. Then, the temperature was raised to 100°C at a temperature increasing rate of 10°C/min and held for 30 to 60 minutes. The amount of carbon dioxide absorbed was calculated on the basis of the peak area detected by TCD at that time.

### {Amine Efficiency}

The carbon dioxide absorption amount measured according to the aforementioned method was divided by the theoretical nitrogen atom content of the gas absorbent-supporting porous substrate, to calculate the amine efficiency. A higher amine efficiency indicates that, of the amino groups in the amine compound supported on the porous substrate, a greater proportion of the amino groups contribute to gas absorption.

### {Theoretical Nitrogen Atom Content and Theoretical Nitrogen Atom Percentage}

The theoretical nitrogen atom content (mmol/g) of the gas absorbent-supporting porous substrate was calculated by dividing the product (mmol) of the amount of the amine compound supported (mmol) and its amine value, by the mass (g) of the gas absorbent-supporting porous substrate. Furthermore, the theoretical nitrogen atom content (mmol/g) of the gas absorbent-supporting porous substrate was converted into a theoretical nitrogen atom percentage (%) on the basis of the atomic weight of nitrogen.

### {Carbon Dioxide Desorption Rate}

The carbon dioxide desorption rate was evaluated using an adsorption amount/adsorption rate measurement device BELCAT II available from MicrotracBEL. 0.1 g of the gas absorbent-supporting porous substrate was placed in a sample cell and pretreated under a helium flow (50 sccm) at 120°C for 30 minutes. After the pretreatment, the temperature of the sample chamber was set to 25°C, and 4 vol% carbon dioxide gas was allowed to flow at 50 sccm for 25 minutes. After that, the flow of carbon dioxide was stopped, and helium was allowed to flow at 50 sccm. Then, the temperature was raised to 100°C at a temperature increasing rate of 10°C/min and held for 30 to 60 minutes. The amount of carbon dioxide equivalent to 90% of the total amount of carbon dioxide absorbed was calculated on the basis of the peak area detected by TCD at that time. The calculated value was divided by the time required for 90% of the carbon dioxide to desorb from the start of desorption, to calculate the desorption rate at 100°C. Also, the desorption rate at 80°C was calculated in the same manner as above, except that the temperature was raised to 80°C instead of raising the temperature to 100°C.

**[Table 1]**

| | Porous substrate | | | | | | | | Gas absorbent | | | | | |
|---|---|---|---|---|---|---|---|---|---|---|---|---|---|---|
| | Form | Modal pore size Dm of macropores [nm] | Modal pore size Ds of mesopores [nm] | Dm/Ds [-] | Bulk density [g/mL] | Pore volume Vm of macropores [mL/mL] | Pore volume Vs of mesopores [mL/mL] | Total pore volume Vt [mL/mL] | Amine compound | Polyether | Amount supported (mass ratio to porous substrate) | | | Polyether/amine compound (mass ratio) |
| | | | | | | | | | | | Amine compound | Polyether | Gas absorbent | |
| Example 1 | Circular cylindrical | 1052 | 26.8 | 39.3 | 0.30 | 0.57 | 0.19 | 0.76 | PEI600 | PEG200 | 0.50 | 0.50 | 1.00 | 1.00 |
| Example 2 | Circular cylindrical | 1052 | 26.8 | 39.3 | 0.30 | 0.57 | 0.19 | 0.76 | PEI600 | PEG200 | 0.25 | 0.75 | 1.00 | 3.00 |
| Example 3 | Circular cylindrical | 1052 | 26.8 | 39.3 | 0.30 | 0.57 | 0.19 | 0.76 | PEI600 | PEG200 | 0.90 | 0.10 | 1.00 | 0.11 |
| Example 4 | Circular cylindrical | 1052 | 26.8 | 39.3 | 0.30 | 0.57 | 0.19 | 0.76 | PEI600 | PEG200 | 0.20 | 0.20 | 0.40 | 1.00 |
| Example 5 | Circular cylindrical | 1052 | 26.8 | 39.3 | 0.30 | 0.57 | 0.19 | 0.76 | PEI300 | PEG200 | 0.50 | 0.50 | 1.00 | 1.00 |
| Example 6 | Circular cylindrical | 1052 | 26.8 | 39.3 | 0.30 | 0.57 | 0.19 | 0.76 | PEI600 | PEG400 | 0.50 | 0.50 | 1.00 | 1.00 |
| Example 7 | Circular cylindrical | 1052 | 26.8 | 39.3 | 0.30 | 0.57 | 0.19 | 0.76 | PEI600 | Me2(PEG200) | 0.50 | 0.50 | 1.00 | 1.00 |
| Example 8 | Circular cylindrical | 1052 | 26.8 | 39.3 | 0.30 | 0.57 | 0.19 | 0.76 | PEI600 | Diol-type PPG400 | 0.50 | 0.50 | 1.00 | 1.00 |
| Example 9 | Circular cylindrical | 1052 | 26.8 | 39.3 | 0.30 | 0.57 | 0.19 | 0.76 | PEI600 | Triol-type PPG300 | 0.50 | 0.50 | 1.00 | 1.00 |
| Comparative Example 1 | Circular cylindrical | 1052 | 26.8 | 39.3 | 0.30 | 0.57 | 0.19 | 0.76 | PEI600 | - | 1.00 | - | 1.00 | - |
| Comparative Example 2 | Spherical | - | 18.4 | - | 0.65 | 0.02 | 0.60 | 0.62 | PEI600 | PEG200 | 0.50 | 0.50 | 1.00 | 1.00 |
| Comparative Example 3 | Spherical | - | 18.4 | - | 0.65 | 0.02 | 0.60 | 0.62 | PEI600 | PEG200 | 0.22 | 0.22 | 0.44 | 1.00 |
| Comparative Example 4 | Circular cylindrical | 1052 | 26.8 | 39.3 | 0.30 | 0.57 | 0.19 | 0.76 | PEI600 | PEG200 | 0.10 | 0.10 | 0.20 | 1.00 |
| Comparative Example 5 | Circular cylindrical | 1052 | 26.8 | 39.3 | 0.30 | 0.57 | 0.19 | 0.76 | PEI600 | PEG200 | 1.00 | 1.00 | 2.00 | 1.00 |

**[Table 2]**

| | **Gas absorbent-supporting porous substrate** | | | | | | | | | | | | | |
|---|---|---|---|---|---|---|---|---|---|---|---|---|---|---|
| | Bulk density [g/mL] | Pore volume Vma of macropores [mL/mL] | Pore volume Vsa of mesopores [mL/mL] | Vma/Vm [-] | Vsa/Vs [-] | Total pore volume Va [mL/mL] | Nitrogen atom percentage [%] | Nitrogen atom content [mmol/g] | Theoretical nitrogen atom percentage [%] | Theoretical nitrogen atom content [mmol/g] | Carbon dioxide absorption amount [mmol/g] | Amine efficiency [%] | Desorption rate [mmol/g/min] | |
| | | | | | | | | | | | | | 100°C | 80°C |
| Example 1 | 0.66 | 0.50 | 0.01 | 0.88 | 0.07 | 0.52 | 9.1 | 6.5 | 7.0 | 5.0 | 1.30 | 26.0 | 0.109 | 0.072 |
| Example 2 | 0.61 | 0.53 | 0.01 | 0.92 | 0.05 | 0.54 | 4.7 | 3.4 | 3.5 | 2.5 | 0.54 | 21.6 | 0.062 | 0.062 |
| Example 3 | 0.65 | 0.48 | 0.01 | 0.84 | 0.06 | 0.49 | 14.0 | 10.0 | 12.7 | 9.0 | 1.66 | 18.4 | 0.064 | 0.023 |
| Example 4 | 0.42 | 0.57 | 0.09 | 0.99 | 0.48 | 0.66 | 6.1 | 4.4 | 3.8 | 2.7 | 0.73 | 25.6 | 0.074 | 0.057 |
| Example 5 | 0.65 | 0.50 | 0.01 | 0.88 | 0.06 | 0.52 | 8.6 | 6.1 | 7.0 | 5.0 | 1.32 | 26.4 | 0.123 | 0.091 |
| Example 6 | 0.64 | 0.50 | 0.01 | 0.88 | 0.06 | 0.51 | 8.6 | 6.1 | 7.1 | 5.0 | 1.30 | 26.0 | 0.103 | 0.081 |
| Example 7 | 0.52 | 0.56 | 0.03 | 0.98 | 0.15 | 0.59 | 9.1 | 6.5 | 5.4 | 3.9 | 1.18 | 23.6 | 0.100 | 0.048 |
| Example 8 | 0.66 | 0.44 | 0.02 | 0.77 | 0.09 | 0.46 | 6.9 | 4.9 | 7.1 | 5.0 | 1.01 | 20.3 | 0.089 | 0.068 |
| Example 9 | 0.66 | 0.48 | 0.01 | 0.83 | 0.06 | 0.49 | 6.9 | 4.9 | 7.0 | 5.0 | 1.27 | 25.5 | 0.080 | 0.031 |
| Comparative Example 1 | 0.62 | 0.49 | 0.01 | 0.86 | 0.06 | 0.50 | 18.0 | 12.9 | 14.1 | 10.0 | 1.30 | 13.0 | 0.043 | 0.017 |
| Comparative Example 2 | Unmeasurable | Unmeasurable | Unmeasurable | Unmeasurable | Unmeasurable | Unmeasurable | 7.7 | 5.5 | 6.9 | 5.0 | Unmeasurable | Unmeasurable | Unmeasurable | Unmeasurable |
| Comparative Example 3 | 1.05 | 0.02 | 0.32 | 0.86 | 0.53 | 0.33 | 5.6 | 4.0 | 4.2 | 3.0 | 0.7 | 21.0 | 0.058 | 0.0249 |
| Comparative Example 4 | 0.36 | 0.56 | 0.14 | 098 | 0.72 | 0.70 | 4.7 | 3.4 | 2.4 | 1.7 | 0.29 | 17.4 | 0.044 | 0.0267 |
| Comparative Example 5 | 0.89 | 0.27 | 0.02 | 0.48 | 0.12 | 0.30 | 11.0 | 7.9 | 9.3 | 6.6 | 1.26 | 18.9 | 0.032 | 0.013 |

The results in Tables 1 and 2 clearly show that the gas absorbent-supporting porous substrates of the Examples, which employ a porous substrate having macropores and mesopores, and a gas absorbent constituted by a composition containing an amine compound and a polyether, and in which Vsa/Vs and Vma/Vm are respectively within predetermined ranges, are superior in terms of amine efficiency and carbon dioxide desorption rate compared to the gas absorbent-supporting porous substrates of the Comparative Examples. Particularly, Table 2 shows that the gas absorbent-supporting porous substrates of the present invention have an excellent gas desorption rate at a relatively low temperature of 80°C.

### Industrial Applicability

The present invention provides a gas absorbent-supporting porous substrate having a high gas absorption amount and a high desorption rate of the absorbed gas.

## Claims

1. A gas absorbent-supporting porous substrate comprising:
a porous substrate which has pores including at least macropores and mesopores; and
a gas absorbent supported in at least some of the pores in the porous substrate, wherein
the gas absorbent is a composition containing an amine compound and a polyether,
a ratio, Vsa/Vs, of Vsa to Vs is 0.60 or less,
where Vs is a pore volume, per unit volume of the porous substrate, of the mesopores in the porous substrate as determined by mercury porosimetry in a pore size range of greater than 2.0 nm and less than 50 nm, and
Vsa is a pore volume, per unit volume of the gas absorbent-supporting porous substrate, of the mesopores in the gas absorbent-supporting porous substrate as determined by mercury porosimetry in a pore size range of greater than 2.0 nm and less than 50 nm, and
a ratio, Vma/Vm, of Vma to Vm is 0.50 or greater,
where Vm is a pore volume, per unit volume of the porous substrate, of the macropores in the porous substrate as determined by mercury porosimetry in a pore size range of from 50 nm to 10 µm, and
Vma is a pore volume, per unit volume of the gas absorbent-supporting porous substrate, of the macropores in the gas absorbent-supporting porous substrate as determined by mercury porosimetry in a pore size range of from 50 nm to 10 µm.

2. The gas absorbent-supporting porous substrate according to claim 1, wherein a nitrogen atom percentage is from 2.5 to 30.0 mass%.

3. The gas absorbent-supporting porous substrate according to claim 1, wherein a ratio of a mass of the polyether to a mass of the amine compound is from 0.05 to 10.

4. The gas absorbent-supporting porous substrate according to claim 1, wherein a ratio of a mass of the gas absorbent to a mass of the porous substrate is 0.20 or greater.

5. The gas absorbent-supporting porous substrate according to claim 1, wherein the amine compound and the polyether are miscible.

6. The gas absorbent-supporting porous substrate according to claim 1, wherein the polyether is a polyether represented by formula (1) or (2) below:
R¹-(O-A¹)ₙ₁-OR² (1)
; or
R¹O-(A¹-O)ₙ₁-R³-(O-A²)ₙ₂-OR² (2),
wherein, A¹ and A² each represent an alkylene group,
R¹ and R² each independently represent a hydrogen atom or an alkyl group,
R³ represents an alkylene group which may optionally be substituted by X, X represents *-(O-A³)ₙ₃-OR⁴,
A³ represents an alkylene group,
R⁴ represents a hydrogen atom or an alkyl group,
* represents a bonding site, and
n1, n2 and n3 each represent a number of repeating units.

7. The gas absorbent-supporting porous substrate according to claim 1, wherein the polyether is a polyether having a weight-average molecular weight of from 200 to 2000.

8. The gas absorbent-supporting porous substrate according to claim 1, wherein the porous substrate has a total pore volume of from 0.55 to 0.95 mL/mL as determined by mercury porosimetry.

9. The gas absorbent-supporting porous substrate according to claim 1, wherein the porous substrate has a co-continuous structure comprising:
a skeleton having the mesopores; and
the macropores.

10. The gas absorbent-supporting porous substrate according to claim 1, wherein a skeleton of the porous substrate contains an element selected from silicon, aluminum, tin, cerium, titanium, and zirconium.

11. The gas absorbent-supporting porous substrate according to claim 1, wherein the porous substrate is a molded article.

12. An acid-gas-absorbing material comprising the gas absorbent-supporting porous substrate according to any one of claims 1 to 11.

13. A carbon-dioxide-absorbing material comprising the gas absorbent-supporting porous substrate according to any one of claims 1 to 11.
